**Europäisches Patentamt**

**European Patent Office**

**Office européen des brevets**

(19)

(11) Veröffentlichungsnummer: **0 470 515 A1**

## (12) EUROPÄISCHE PATENTANMELDUNG

(21) Anmeldenummer: **91113008.6**

(22) Anmeldetag: **02.08.91**

(51) Int. Cl.5: **A01J 25/06**, A01J 25/11

(30) Priorität: **07.08.90 FI 903909**

(43) Veröffentlichungstag der Anmeldung:
**12.02.92 Patentblatt 92/07**

(84) Benannte Vertragsstaaten:
**DE FR GB IT NL**

(71) Anmelder: **HACKMAN-MKT OY**
**Emalikatu 10 B**
**SF-04400 Järvenpää(FI)**

(72) Erfinder: **Kivelä, Tapani**
**Juhannustie 21 I 17**
**SF-00750 Helsinki(FI)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) **Vorrichtung zum Herstellen von Ouark.**

(57) Gegenstand der Erfindung ist eine Vorrichtung zum Herstellen von granuliertem Quark mit einem Faß (1) für die Coagulation, in dem die Molke durch Einsatz von Geräten (3,4) in festen Quark und flüssige Molke getrennt wird, und einen dem Faß (1) nachgeschalteter Behälter (15), der durch Leitungen mit dem Faß (1) verbunden ist, um den Quark und die Molke in den Behälter zu führen. Um die Brauchbarkeit dieser Vorrichtung zu verbessern wird vorgeschlagen, daß wenigstens ein Teil der Innenwand des Behälters (15) mit Öffnungen versehen ist, durch welche die flüssige Molke auslaufen kann.

EP 0 470 515 A1

Gegenstand der Erfindung ist eine Vorrichtung zum Herstellen von granuliertem Quark mit einem Faß für die Coagulation, in dem die Milch durch Einsatz von Geräten in festen Quark und flüssige Molke getrennt wird, und einen dem Faß nachgeschalteten Behälter, der durch Leitungen mit dem Faß verbunden ist, um den Quark und die Molke in den Behälter zu führen.

Wenn Käse in einem Faß für die Coagulation zubereitet wird, muß die Milch zuerst zu festem Quark und flüssiger Molke gerinnen. Die höhere Dichte des Quarks bewirkt sein Absetzen während der Erhitzung als eine feste Masse auf dem Boden des Fasses. Danach verwandeln im Inneren des Fasses befestigte Schneidgeräte den Quark in ein Granulat und verrühren die Mischung des granulierten Quarks und der Molke vor dem Austrag aus dem Faß. Ein derartiges Faß für die Coagulation ist aus der FI-Patentanmeldung 893 687 bekannt.

Die FI-PS 64 262 beschreibt ein an einem Faß für die Coagulation befestigtes Trenngerät für die Molke, welches eine in dem Faß versenkt angeordnete Schale und eine Einlaßöffnung hat, unter der die Schale mit einer Auslaßöffnung an der Seite des Fasses verbunden werden kann, um ein Auslaufen der Molke zu ermöglichen, die mit der Schale abgetrennt worden ist.

Bekannte Trenngeräte für die Molke, die in Kombination mit einem Faß für die Coagulation arbeiten, sind mit dem grundsätzlichen Mangel behaftet, daß der Gerinnungsprozeß einschließlich der Geräte in dem Faß für die Dauer der Molkeabscheidung angehalten werden müssen. Dieses Verfahren verursacht sowohl Materialverluste und Verklumpungen, als auch zusätzlichen Einsatz von Maschinen und Geräten. Weiterhin sind solche Fässer für die Coagulation, die alle notwendigen Geräte, eine Heizung und Abscheidesysteme für die Molke enthalten sehr kompliziert und teuer. Das gilt insbesondere, wenn eine große Anzahl verschiedener Funktionen beim Herstellen unterschiedlicher Käsesorten betrachtet wird. Während des Gerinnungsprozesses bleiben einige der Möglichkeiten des Fasses für die meiste Zeit ungenutzt.

Traditionell bekannt ist die Verwendung eines hinter dem Faß für die Coagulation angeordneten Zwischenbehälters, der aber nur für das Umrühren des Quarks und der Entnahme des Quarks in Formen benutzt wird. Das Abscheiden der Molke und Erhitzen des Quarks verbleibt in diesem System auf der Seite des Fasses für die Coagulation.

Bekannt ist aus der FI-Patentanmeldung 900 843 eine Abscheidevorrichtung für die Molke, die außen an dem Faß für die Coagulation befestigt ist und auch mit einem Zwischenbehälter verbunden sein kann. Ein solches Gerät arbeitet generell nach dem Umlaufprinzip, wobei die Mischung von Quark und Molke durch das Abscheidegerät für die Molke zirkuliert und dann die Mischung in das Faß für die Coagulation oder den Zwischenbehälter zurückgeführt wird.

Davon ausgehend liegt der Erfindung die **Aufgabe** zugrunde, eine neue Vorrichtung zum Herstellen granulierten Quarks zu schaffen, die vielseitiger und wirtschaftlicher im Gebrauch ist und die vorstehend geschilderten Probleme nicht hat.

Als technische **Lösung** wird dafür eine Vorrichtung vorgeschlagen, bei der wenigstens ein Teil der Innenwand des Behälters mit Öffnungen versehen ist, durch welche die flüssige Molke auslaufen kann.

Bei einer praktischen Ausführungsform der Vorrichtung kann besonders der obere Teil der Innenwand des Behälters als zylindrische Siebwand ausgebildet sein, durch welche die flüssige Molke in den Ringraum zwischen der Siebwand und der Innenwand des Behälters und weiter aus dem Behälter herauslaufen kann.

Bei einer anderen praktischen Ausführungsform können die Öffnungen oder Löcher der Siebwand so bemessen sein, daß sie nur für die Molke durchlässig sind.

Die **Vorteile** der Erfindung liegen darin, daß der Feinschnitt und das Umrühren der Quarkmasse in optimalen Fällen durchgeführt werden kann unter Verwendung von zweckgestalteten Geräten für jede spezifische Operation, um Verluste zu minimieren und die Wärmeübertragung beim Aufheizen und Kühlen der Masse zu verbessern. Berechnungsbeispiele zeigen, daß acht große und teuere Fässer für die Coagulation einer Molkerei durch eine Kombination von vier einfacheren Fässern und sechs Zwischenbehältern ersetzt werden können. Obwohl die Anzahl der Einheiten in diesem System größer ist, sind die Geräte einfacher und preiswerter als solche herkömmlicher Art. Dies trägt auch zu der verbesserten Flexibilität bei der Handhabung des Quarkes bei. Natürlich kann das Faß für die Coagulation eine beliebige Faßtype sein, aber die am meisten bevorzugte Type ist von der Art, die den Quark in einem Zuge feinschneiden kann. Es ist möglich damit die Wärme des Fasses zu verteilen. Ein weiterer Vorteil der Erfindung kann darin bestehen, daß das Umrühren des Quarks für die Dauer des Abscheidens der Molke nicht angehalten werden muß, was eine Überlastung der Rührgeräte und Antriebsmaschine während des Absetzen des Quarks auf dem Boden des Fasses verhindert.

Weitere Einzelheiten und Vorteile ergeben sich aus der nachfolgenden Beschreibung der zugehörigen Zeichnung, in der eine erfindungsgemäß ausgebildete Vorrichtung schematisch und teilweise geschnitten in Seitenansicht dargestellt worden ist.

Ein Faß 1 für die Coagulation ist im vorliegenden Fall ein waagerecht aufgestellter Coagulationsboiler mit einem zylindrischen Querschnitt, in dem die Molke von dem Quark getrennt und der Quark zu einem Granulat feingeschnitten wird. Zu diesem Zweck ist der Boiler mit einer nicht dargestellten Einlaßleitung versehen, durch welche die Milch dem Boiler zugeführt wird und welche auch für das Entfernen der Molke benutzt werden kann, die von dem Quark getrennt worden ist, und mit einer Auslaßleitung 2 durch welche der granulierte Quark und die Molke aus dem Boiler entfernt werden.

Das Feinschneiden der Quarkmasse in granulierten Quark findet in dem Faß 1 mit Hilfe von Geräten statt, welche in diesem Falle ein Netz 3 enthalten, welches den Quark feinschneidet. Die genaue Konstruktion des Fasses 1 im Inneren ist nicht wichtig für die Funktion der Erfindung und tatsächlich ist jedes herkömmliche Faß für diesen Zweck geeignet. Eine mögliche Faßtype ist in Bezug auf ihre Schneide- und Rührgeräte in der FI-Patentanmeldung 893 687 beschrieben worden. Gleichwohl ist das Abscheiden der Molke nicht an das Faß für die Coagulation gebunden, aber anstatt nach der Schneide-, Absetz- und Umrührphase, in welcher das Umrühren in herkömmlicher Weise mit Hilfe von Rührelementen 4 durchgeführt wird, werden der granulierte Quark und die Molke unter ihrem Gewicht durch eine Auslaßleitung 2 in einen Behälter 15 ausgetragen, der auf einem niedrigeren Niveau steht. Der Behälter 15 muß im Prinzip nicht auf einem niedrigen Niveau im Verhältnis zum Faß 1 stehen, wobei der Transport des Quarks mit Hilfe einer Pumpe durchgeführt werden könnte, aber eine solche Anordnung ist nicht empfehlenswert, weil der granulierte Quark bei einer solchen Behandlung leicht zerfällt.

Der Behälter 15 in dieser Anordnung ist ein zylindrischer, senkrecht sich erstreckender Kessel welcher mit seinen Füßen 5 auf dem Boden ruht. Der Behälter 15 ist versehen mit einem Rührpaddel 6, welches über eine Welle 8 mit einem Motor 7 gedreht wird, welcher auf dem Behälter befestigt ist. Außerdem ist der Behälter 15 mit einem oder mehreren innen angeordneten Belüftungsrohren 9 versehen, die vorzugsweise am Umfang des Kontainers positioniert sind und Unruhe in die Mischung des granulierten Quarks und der Molke hineintragen, die gerührt werden muß.

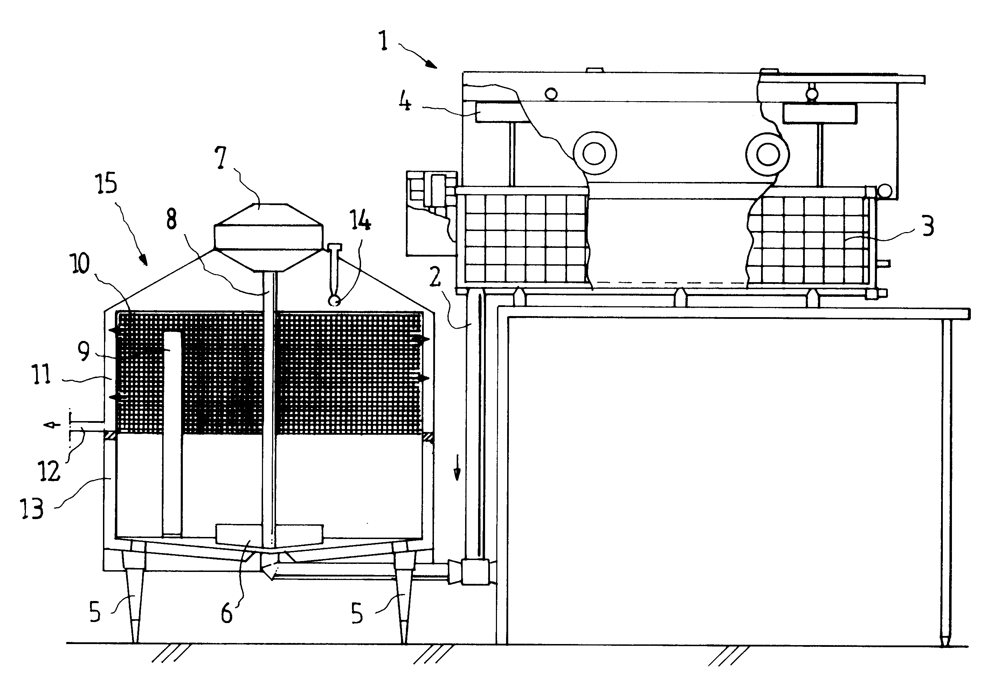

Der obere Teil der Innenseite der Schale des Behälters 15 ist mit einer zylindrischen Siebwand 10 versehen, die sich am inneren Umfang des Behälters erstreckt und deren Löcher oder Schlitze so dimensioniert sind, daß sie nur für die flüssige Molke durchlässig sind. Im Gegensatz dazu wird der granulierte Quark daran gehindert durch die Siebwand 10 zu gehen. Eine Verstopfung der Löcher ist gering durch die große Oberfläche der Siebwand 10 und eine geringe Durchflußmenge. Die flüssige Molke läuft durch die Siebwand 10 in einen Ringraum 11, der zwischen der Siebwand 10 und der Schale des Behälters in einer Weise gebildet wird, wie es durch Pfeile in der Zeichnung dargestellt worden ist. Aus diesem Ringraum 11 wird die Molke durch einen Anschluß 12 abgezogen. Der untere Rand des Ringraumes 11 ist auf dem Niveau des unteren Randes der Siebwand 10 abgedichtet. Unter dem Ringraum 11 ist ein entsprechender Ringraum 13 angeordnet, welcher zum Beheizen des Behälters mit heißem Wasser oder Dampf oder alternativ zum Kühlen des Behälters mit kaltem Wasser benutzt werden kann.

Der Behälter 15 ist auch mit einer nicht dargestellten Auslaßleitung versehen, um den Quark beispielsweise in Formen abzuleiten. Der Ringraum 11 ist an seiner Oberseite offen um seine Reinigung mit Wasser und möglichen Detergenzien zu erleichtern, welche durch das Einlaßrohr 14 geleitet werden können. Ein Auffüllen mit Wasser, welches erforderlich sein mag, kann auf gleiche Weise durch die Einlaßleitung 14 erfolgen.

Für einen Fachmann ist es wichtig, daß die verschiedenen Geräte der Erfindung sich nicht in den vorstehend beschriebenen Ausführungsformen erschöpfen, sondern innerhalb des Schutzbereiches der Ansprüche variieren können. Insbesondere muß die für das Abtrennen der Molke bestimmte Siebwand nicht die vorstehend beschriebene Struktur haben, während ein wichtiges Merkmal darin besteht, daß der Behälter mit Öffnungen versehen ist, durch welche die flüssige Molke auslaufen kann, ohne den granulierten Quark passieren zu lassen.

**Bezugszeichenliste**

| 1 | Faß |
|---|---|
| 2 | Leitung |
| 3 | Netz |
| 4 | Rührelement |
| 5 | Fuß |
| 6 | Paddel |
| 7 | Motor |
| 8 | Welle |
| 9 | Belüftungsrohr |
| 10 | Siebwand |
| 11 | Ringraum |
| 12 | Anschluß |
| 13 | Ringraum |
| 14 | Rohr |
| 15 | Behälter |

**Patentansprüche**

1. Vorrichtung zum Herstellen von granuliertem Quark mit einem Faß (1) für die Coagulation, in dem die Molke durch Einsatz von Geräten (3,4) in festen Quark und flüssige Molke getrennt wird, und einen dem Faß (1) nachgeschalteten Behälter (15), der durch Leitungen mit dem Faß (1) verbunden ist, um den Quark und die Molke in den Behälter zu führen, **dadurch gekennzeichnet**, daß wenigstens ein Teil der Innenwand des Behälters (15) mit Öffnungen versehen ist, durch welche die flüssige Molke auslaufen kann.

2. Vorrichtung nach Anspruch 1, dadurch gekennzeichnet, daß besonders der obere Teil der Innenwand des Behälters (15) als zylindrische Siebwand (10) ausgebildet ist, durch welche die flüssige Molke in den Ringraum zwischen der Siebwand (10) und der Innenwand des Behälters (15) und weiter aus dem Behälter laufen kann.

3. Vorrichtung nach den Ansprüchen 1 oder 2, dadurch gekennzeichnet, daß die Öffnungen oder Löcher der Siebwand (10) so bemessen sind, daß sie nur für die Molke durchdringbar sind.

Europäisches
Patentamt

# EUROPÄISCHER RECHERCHENBERICHT

Nummer der Anmeldung

**EP 91 11 3008**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 982 480 (G.G. KAMPHUIS) <br> * Spalte 1, Zeile 14 - Zeile 17; Abbildung 3 * * <br> – – – | 1-3 | A 01 J 25/06 <br> A 01 J 25/11 |
| Y | VOEDINGSMIDDELEN TECHNOLOGIE. Bd. 7, Nr. 19, 8. Mai 1974, ZEIST NL Seiten 14 - 17; L.G.W. VAN DER LOO: 'DE WRONGELDOSEERAUTOMAAT, EEN BELANGRIJKE VOORUITGANG BIJ DE MECHANISATIE VAN DE KAASBEREIDING (II)' <br> * Seite 17, Spalte 2, Zeile 31 - Spalte 3, Zeile 30; Abbildungen 3,4 * * <br> – – – | 1-3 | |
| A | US-A-3 438 131 (J. UBBELS ET AL.) <br> – – – | | |
| A | US-A-2 272 954 (P. SARTORI) <br> – – – | | |
| A | DE-C-961 678 (H. SCHULZ) <br> – – – | | |
| A | DE-B-1 142 270 (WESTFALIA SEPARATOR A.G.) <br> – – – | | |
| A,D | FI-C-64 262 (MKT-TEHTAAT OY) <br> – – – | | |
| P,A,D | EP-A-0 411 651 (HACKMAN MKT OY) <br> – – – – – | | |

| RECHERCHIERTE SACHGEBIETE (Int. Cl.5) |
|---|
| A 01 J <br> A 23 C |

Der vorliegende Recherchenbericht wurde für alle Patentansprüche erstellt

| Recherchenort | Abschlußdatum der Recherche | Prüfer |
|---|---|---|
| Den Haag | 07 November 91 | MARANGONI G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

------------------------------------------------

& : Mitglied der gleichen Patentfamilie, übereinstimmendes Dokument